# EUROPEAN PATENT APPLICATION

(11) **EP 3 884 769 A1**
(43) Date of publication of application: **29.09.2021**
(21) Application number: 21162141.2
(22) Date of filing: 11.03.2021
(51) Int. Cl.: A01G 27/00

(54) **IRRIGATION SYSTEM AND METHOD FOR MOVABLE GROW TABLES**

(30) Priority: 24.03.2020 CA 3076732
(71) Applicant: South Essex Fabrication Inc., Leamington, Ontario N8H 3W5 (CA)
(72) Inventor: QUIRING, Peter, Leamington, Ontario N8H 3W5 (CA); MCRAE, Matthew James, Leamington, Ontario N8H 3W5 (CA); FRIESEN, Joseph Jake, Leamington, Ontario N8H 3W5 (CA); FRIESEN, Jacob, Leamington, Ontario N8H 3W5 (CA)
(74) Representative: V.O.

(57) **Abstract**

The present disclosure relates to an irrigation system for irrigating a plurality of plants growing in growing media. The system includes a movable grow table for supporting and displacing the plants and a gravity irrigation device which is coupled to the movable grow table and displaceable therewith. The gravity irrigation device includes a reservoir which is coupled to the movable grow table, a main header in fluid communication with an outlet of the reservoir which is configured to receive a flow of water therefrom, as well as a plurality of microtubes which extends from a plurality of header outlets. The microtubes are configured to receive a head-pressurized flow of water from the main header to evenly irrigate the plants. A method for irrigating a plurality of plants growing in growing media is also described.

## Description

### TECHNICAL FIELD

The technical field generally relates to irrigation systems and methods for irrigating plants and, more particularly, to gravity irrigation systems and methods for movable grow tables.

### BACKGROUND

There are various irrigation methods for irrigating plants. Depending on how the irrigation system is designed, installed, maintained, operated, etc., it can be more efficient or effective than other types of irrigation.

When cultivated in greenhouses, plants can be put in pots or other containers in order to be placed close to each other on tables, where they are grown to a suitable size according to known methods. The grow tables can be positioned in the greenhouse in long rows, with work passages between the rows.

Various moving grow tables are available on the market. They allow reducing the number of non-efficient aisleways and are typically designed so as to allow movable beds to easily move to one side or the other relative to a main structure which can be fixedly secured to the ground, creating access aisleways only when and where they are needed. Movable grow tables therefore increase growing space in the greenhouse and can be displaced to different locations therein so that the plants can be exposed to different conditions.

It can be challenging to evenly and efficiently irrigate plants using an irrigation system, while maintaining mobility of the plants which are supported on, and displaced by, movable grow tables.

There is therefore a need for improved irrigation systems and methods that can be used with movable grow tables, and which, by virtue of their design and components, would be able to overcome or at least minimize some of the challenges in the field.

### SUMMARY

The present invention is defined by the independent claims. In some implementations, there is provided an irrigation system for irrigating a plurality of plants growing in growing media, the irrigation system comprising: a movable grow table for supporting and displacing the plurality of plants; and a gravity irrigation device coupled to the movable grow table and being displaceable therewith, the gravity irrigation device comprising: a reservoir coupled to the movable grow table and configured for receiving water, the reservoir comprising an outlet formed in a lower section thereof and being located above the growing media in which the plurality of plants are growing so as to provide head pressure; a main header in fluid communication with the outlet of the reservoir and configured for receiving a flow of water therefrom, the main header comprising a plurality of header outlets along a length thereof; and a plurality of microtubes respectively extending from the plurality of header outlets and configured for receiving a head-pressurized flow of water from the main header for flow through the microtubes, the microtubes each having a microtube outlet positioned proximate to a corresponding one of the plants such that the microtubes expel water from respective microtube outlets to evenly irrigate the plants.

In some implementations, each of the plurality of microtubes defines a microtube section adjacent to the main header and extending upwardly from a corresponding header outlet.

In some implementations, each of the plurality of microtube outlets is located above the main header, allowing the main header to be filled with water so as to build the head pressure, and then providing the head-pressurized flow to travel through the microtubes upwardly and then downwardly towards the plants.

In some implementations, the reservoir is releasably coupled to the movable grow table.

In some implementations, the movable grow table extends longitudinally and has a first table end and a second table end, the reservoir being located at one of the first and second table ends.

In some implementations, the reservoir is located at a pre-determined height above the growing media so as to provide the head pressure sufficient to expel water from the microtube outlets. The head pressure can be between 5 and 0.20 meters, between 4 and 0.30 meters, between 3 and 0.40 meters or between 2 and 0.50 meters.

In some implementations, the irrigation system further comprises a reservoir support downwardly extending from the reservoir and being mounted to the movable grow table.

In some implementations, the reservoir support has a reservoir end being coupled with the reservoir and a table end being coupled with the movable grow table.

In some implementations, the reservoir has side walls mounted to a bottom wall, the reservoir support comprising a first rod downwardly extending from a first sidewall of the reservoir and having a first rod end being coupled with the movable grow table.

In some implementations, the reservoir support further comprises a second rod downwardly extending from a second sidewall of the reservoir and having a second rod end being coupled with the movable grow table.

In some implementations, the table end of the reservoir support is releasably coupled to the movable grow table.

In some implementations, the irrigation system further comprises a filter located in the reservoir and/or the main header and configured so as to prevent oversized debris reaching the microtubes. The filter can be located in the reservoir and covers the outlet of the reservoir and comprises a plurality of pores configured to permit the water to flow therethrough.

In some implementations, the reservoir comprises a filter receiving section formed in the lower section thereof.

In some implementations, a lower portion of the filter is received within the filter receiving section of the reservoir.

In some implementations, the filter comprises a filter wall superposed to the outlet of the reservoir and a filter end extending therefrom.

In some implementations, both the filter end and the filter wall comprise the pores.

In some implementations, the lower portion of the filter is releasably received within the filter receiving section of the reservoir.

In some implementations, the filter is plate-shaped and configured to fit in the lower section of the reservoir.

In some implementations, the pores are each configured and sized so as to prevent the oversized debris to reach the microtubes.

In some implementations, the pores are each configured and sized so as to prevent debris from reaching the main header.

In some implementations, the pores are smaller than the microtube outlets.

In some implementations, the pores each define a pore width of between about 0.2 mm and about 1.8 mm.

In some implementations, the reservoir is made from a foodgrade material.

In some implementations, the filter is made from a foodgrade material.

In some implementations, the foodgrade material comprises stainless steel.

In some implementations, the movable grow table comprises a fixed structure and a movable support slidably mounted to the fixed structure for supporting the plants.

In some implementations, the reservoir is coupled to the movable support of the movable grow table.

In some implementations, the gravity irrigation device and the movable support are displaceable relative to the fixed structure as a unit.

In some implementations, the reservoir is an open-top reservoir.

In some implementations, the main header extends over top of the movable grow table.

In some implementations, the main header comprises a pipe coupled to the outlet of the reservoir.

In some implementations, the main header is a flexible pipe coupled to the outlet of the reservoir.

In some implementations, the main header comprises an irrigation section running the length of the movable grow table.

In some implementations, the main header comprises a vertical section downwardly extending from the reservoir.

In some implementations, the main header further comprises an horizontal section comprising the irrigation section and extending from the first section at an angle. The angle can be between 45 degrees and 135 degrees. More particularly, the angle can be 90 degrees.

In some implementations, the vertical section extends longitudinally and vertically and has a vertical section first end extending from the outlet of the reservoir and a vertical section second end.

In some implementations, the horizontal section extends longitudinally and horizontally and has a horizontal section first end extending from the vertical section second end and an horizontal section second end.

In some implementations, the vertical section second end is coupled to the horizontal section first end.

In some implementations, the vertical section second end is releasably coupled to the horizontal section first end.

In some implementations, the main header further comprises a coupling member for coupling the horizontal section first end to the vertical section second end.

In some implementations, the horizontal section second end is capped.

In some implementations, the main header is secured to the movable grow table.

In some implementations, the flow of water from the reservoir is greater than the head-pressurized flow of water expelled from the microtube outlets.

In some implementations, the main header is a single pipe.

In some implementations, the main header has a main header first end and a main header second end, the main header first end being coupled to the outlet of the reservoir.

In some implementations, the main header second end is capped.

In some implementations, the length of the main header is between 15 meters and 1 meter, between 13 meters and 3 meters, between 10 meters and 5 meters or between 8 meters and 6 meters.

In some implementations, the inner diameter of the main header is between 100 mm and 5 mm, between 80 mm and 10 mm, between 60 mm and 20 mm or between 40 mm and 25 mm.

In some implementations, the reservoir is made from a material that prevents UV rays to penetrate and reach the water provided therein.

In some implementations, the main header is made from a material that prevents UV rays to penetrate and reach the flow of water travelling therein.

In some implementations, the microtubes are made from a material that prevents UV rays to penetrate and reach the head-pressurized flow of water travelling therein.

In some implementations, the microtubes each comprises a microtube first member extending from the main header and a microtube end member extending from the microtube first member at a microtube angle, the microtube angle being provided about the respective microtube outlet. The microtube angle can be between 80 degrees and 100 degrees. More particularly, the microtube angle is 90 degrees.

In some implementations, the microtube angle is such as to minimize or prevent the siphoning action which brings back the head-pressurized flow of water into the main header after head pressure has dropped.

In some implementations, the microtube outlets are each configured to be positioned above an upper surface of the growing media.

In some implementations, the irrigation system further comprises a plurality of stakes respectively supporting the microtubes above the growing media, the stakes each having a stake first end and a stake second end, the stake first end secured to and extending from a corresponding microtube outlet.

In some implementations, the microtubes each extends between a microtube first end and a microtube second end, the microtube first end being coupled to the main header.

In some implementations, the microtube second end is connected to a respective one of the stakes that is pushed into the growing media about a respective one of the plants.

In some implementations, the microtubes each defines a microtube inner diameter and the main header defines a main header inner diameter, the microtube inner diameter being smaller than the main header diameter.

In some implementations, a ratio main header inner diameter: microtube inner diameter is such that the head pressure is sufficient to evenly irrigate the plants. The ratio main header inner diameter: microtube inner diameter can be between 2 and 15.

In some implementations, the irrigation system further comprises a plurality of microtube connections connecting a respective one of the microtubes to a respective one of the header outlets.

In some implementations, the microtube connections each comprises a free-flowing barb connection.

In some implementations, the microtube outlets are located at the same level above the main header.

In some implementations, the microtubes each defines a microtube highest point, the microtube highest points being located at the same level above the main header.

In some implementations, the microtubes have the same length.

In some implementations, the irrigation system further comprises a drain assembly disposed below the movable grow table for receiving and disposing of non-absorbed water flowing down from the plants by gravity.

In some implementations, the drain assembly includes an upper water receiving container and at least one drain extending downwardly from the upper water receiving container.

In some implementations the irrigation system further includes a non-absorbed water collecting container removably positionable below the movable grow table, in vertical alignment therewith, for receiving non-absorbed water flowing down from the plants by gravity, the non-absorbed water collecting container including a plurality of side walls and a bottom wall.

In some implementations, the non-absorbed water collecting container includes an outlet opening to allow excess water collected in the non-absorbed water collection container to be transferred from the non-absorbed water collection container into a measurement device.

In some implementations, the outlet opening is defined in one of the side walls and being located adjacent the bottom wall.

In some implementations, the irrigation system further comprises a tap member operatively coupled to the outlet opening, the tap member including a spout extending away from the non-absorbed water collecting container and a valve operatively coupled to the spout.

In some implementations, the non-absorbed water collecting container is substantially rectangular.

In some implementations, the irrigation system further includes a mounting structure positionable under the movable grow table, the non-absorbed water collecting container being removably mountable to the mounting structure.

In some implementations, the mounting structure include a pair of C-shaped rails, each C-shaped rail having a rail channel, the C-shaped rails being positioned such that the rail channels of both C-shaped rails face each other.

In some implementations, the non-absorbed water collecting container includes a mounting bracket for engaging at least one of the first and second C-shaped rails.

In some implementations, the mounting bracket includes a movable plate slidably connected to the bottom wall of the non-absorbed water collecting container, the movable plate being positioned so as to extend away from a first side of the non-absorbed water collecting container and laterally beyond a second side of the non-absorbed water collecting container opposite the first side, the movable plate being slidable along the bottom wall towards and away from the first side.

In some implementations, there is provided a method for irrigating a plurality of plants growing in growing media, the method for example utilizing a system according the invention, the method comprising: providing water in a reservoir located above a movable table and being displaceable therewith; flowing the water by gravity under a head pressure from the reservoir, through a main header, and then into a plurality of microtubes in fluid communication with the main header; and expelling the water from the microtubes into the plants at an even distribution.

In some implementations, the water flows upwardly from the main header into the plurality of microtubes in sections of the microtubes adjacent to the main header.

In some implementations, the plants are located above the main header.

In some implementations, the method further comprises subjecting the water to filtration prior to flowing the water into the microtubes.

In some implementations, the method further comprises subjecting the water to filtration prior to flowing the water through the main header.

In some implementations, the plants comprise flowering plants, vegetable plants or fruit plants.

In some implementations, the flow of water from the reservoir is greater than the head-pressurized flow of water expelled from the microtubes.

In some implementations, the method further comprises flowing the water through a plurality of angled elbows prior expelling from the microtube outlets towards the growing media.

In some implementations, the water is expelled downwardly towards the plants.

In some implementations, the method further comprises providing highest points of the microtubes at the same level above the main header.

In some implementations, the method further comprises providing microtube outlets of the microtubes at the same level above the main header.

In some implementations, there is provided a gravity irrigation device to be coupled to a movable grow table configured to support and displace a plurality of plants growing in growing media, the gravity irrigation device comprising: a reservoir to be coupled to the movable grow table and to be displaceable therewith, the reservoir being configured for receiving water and comprising an outlet formed in a lower section thereof to be located above the growing media in which the plurality of plants are growing so as to provide head pressure; a main header in fluid communication with the outlet of the reservoir and configured for receiving a flow of water therefrom, the main header comprising a plurality of header outlets along a length thereof; and a plurality of microtubes respectively extending from the plurality of header outlets and configured for receiving a head-pressurized flow of water from the main header for flow through the microtubes, the microtubes each having a microtube outlet to be positioned proximate to a corresponding one of the plants such that the microtubes expel water from respective microtube outlets to evenly irrigate the plants.

In some implementations, there is provided a gravity irrigation device for irrigating a plurality of plants growing in growing media, the gravity irrigation device comprising: a reservoir to be positioned proximate to the plurality of plants and configured for receiving water, the reservoir comprising an outlet formed in a lower section thereof to be located above the growing media in which the plurality of plants are growing so as to provide head pressure; a main header in fluid communication with the outlet of the reservoir and configured for receiving a flow of water therefrom, the main header comprising a plurality of header outlets along a length thereof; and a plurality of microtubes respectively extending from the plurality of header outlets and configured for receiving a head-pressurized flow of water from the main header for flow through the microtubes, the microtubes each having a microtube outlet to be positioned proximate to a corresponding one of the plants such that the microtubes expel water from respective microtube outlets to evenly irrigate the plants downwardly in the growing media.

In some implementations, each of the plurality of microtubes defines a microtube section adjacent to the main header and extending upwardly from a corresponding header outlet.

In some implementations, each of the plurality of microtube outlets is located above the main header, allowing the main header to be filled with water so as to build the head pressure, and then providing the head-pressurized flow to travel through the microtubes upwardly and then downwardly towards the plants.

In some implementations, there is provided a method for irrigating a plurality of plants growing in growing media, the method comprising: providing water in a reservoir located above the growing media; flowing the water by gravity under a head pressure from the reservoir, through a main header, and then upwardly into a plurality of microtubes in fluid communication with the main header; and expelling the water from the microtubes into the plants at an even distribution.

### BRIEF DESCRIPTION OF THE DRAWINGS

Figure 1 is a diagram illustrating a greenhouse which is provided with a plurality of irrigation systems in accordance with a non-limitative embodiment.
Figure 2 is a diagram illustrating an irrigation system in accordance with a non-limitative embodiment.
Figure 3 is a top perspective view of an irrigation system in accordance with a non-limitative embodiment.
Figure 4 is a top plan view of the irrigation system of Figure 3.
Figure 5 is a side elevation view of the irrigation system of Figure 3.
Figure 6 is a front elevation view of the irrigation system of Figure 3.
Figure 7 is a top perspective view of a reservoir in accordance with a non-limitative embodiment.
Figure 8 is a bottom perspective view of the reservoir of Figure 7.
Figure 9 is a top plan view of the reservoir of Figure 7.
Figure 10 is a front elevation view of the reservoir of Figure 7.
Figures 11 and 11A are side elevation views of a section of a main header in accordance with a non-limitative embodiment.
Figures 12 and 12A are top plan views of the section of the main header shown in Figures 11 and 11A respectively.

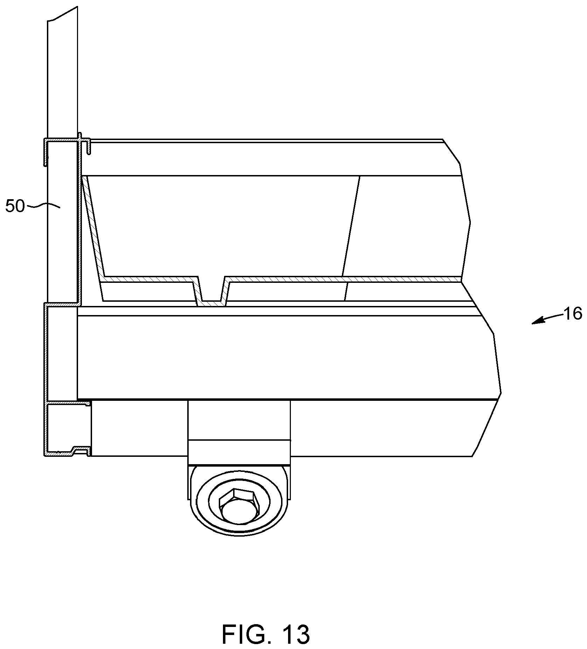

Figure 13 is a close-up view of a connection between the movable grow table and the reservoir.
Figure 14 is a perspective view of a portion of a filter in accordance with a non-limitative embodiment.
Figure 15 is a close-up view of a microtube which extends from a header outlet of the main header, the microtube having a microtube first member and a microtube second member which extends from the microtube first member at a microtube angle.
Figure 16 is a front elevation view of an irrigation system, in accordance with another non-limitative embodiment, in which a liquid recovery tray is positioned below a movable grow table.
Figure 17 is a perspective view of the liquid recovery tray of Figure 16, shown in isolation.
Figure 18 is a bottom view of a portion of the liquid recovery tray of Figure 16.

### DETAILED DESCRIPTION

The irrigation systems and methods described herein combine gravity irrigation with movable grow tables for irrigating plants. A gravity irrigation device can be secured to a movable grow table and can be configured to receive water for continuous flow therethrough, from an elevated point down toward the plants.

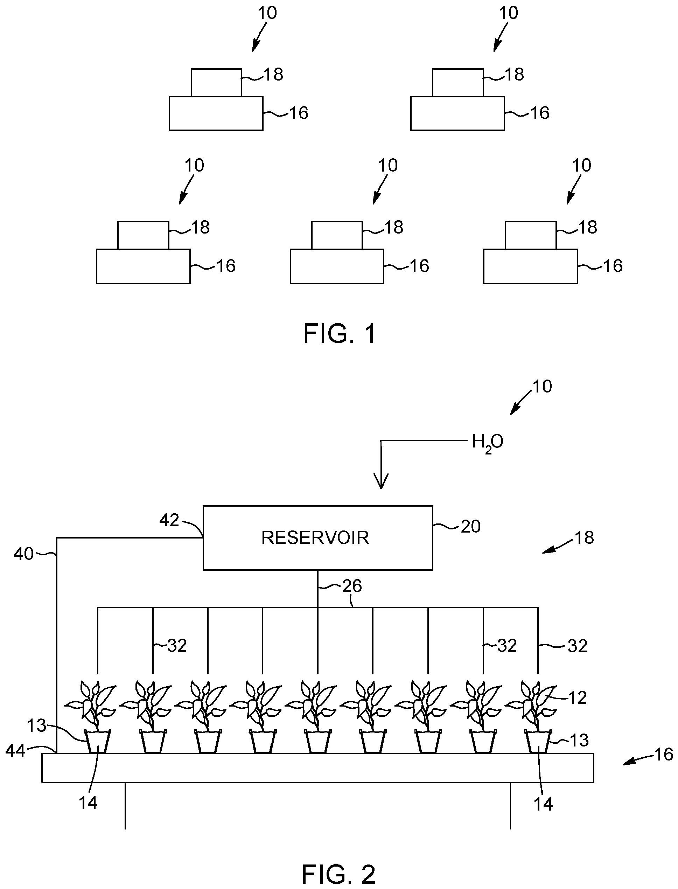

Referring now to the drawings and more particularly to Figure 1, there is schematically illustrated a greenhouse, for example, which is provided with a plurality of irrigation systems 10, in accordance with an example embodiment. Each one of the irrigation systems 10 includes a conventional movable grow table 16 and a gravity irrigation device 18 which is coupled thereto. Each movable grow table 16 is configured and adapted to support and displace a plurality of pots or containers which contain the plants. The movable grow tables 16 can include a main structure, which can be fixed to the ground surface of the greenhouse for example (e.g., a main structure comprising railings), as well as a movable bed (e.g., seedbed, tray, bench, etc.) which is configured for supporting the plants and which is displaceable relative to the main structure or to the ground surface of the greenhouse (e.g., a movable bed with rollers for rolling within the railings of the main structure). One or more gravity irrigation device(s) 18 can therefore be coupled to a movable grow table 16 so as to allow the gravity irrigation device(s) 18 and the corresponding movable grow table 16 to be displaced within the greenhouse as a unit. The movable grow table 16 can take any shape, size and/or configuration. The movable grow tables can further be automated and controlled remotely at a distance using various control systems.

Referring now to the embodiment shown in Figure 2, there is provided an irrigation system 10 which is configured for irrigating a plurality of plants 12 provided in a plurality of pots or containers 13. The plants 12 are growing in growing media 14. The irrigation system 10 includes a movable grow table 16 which is adapted to support and displace the plants 12 in the greenhouse or elsewhere, as will be described in more detail below. The irrigation system 10 further includes a gravity irrigation device 18 which is coupled to the movable grow table 16 and which is displaceable therewith. Still referring to Figure 2, the gravity irrigation device 18 includes a reservoir 20, which is coupled to the movable grow table 16, a main header 26 which is found to be in fluid communication with the reservoir 20 and a plurality of microtubes 32 which are in fluid communication with the main header 26.

In a watering cycle, once the reservoir 20 has been filled, water flows from the reservoir 20 to fill the main header 26. As water accumulates in the main header 26 and liquid pressure builds, water is forced through the plurality of irrigation microtubes 32 and then, evenly into the growing media 14 supporting the plants 12. The irrigation system 10 therefore allows to water the plants 12 using gravity and to evenly distribute the water to the many plants 12 on the movable grow table 16, while maintaining mobility of the plants 12 by displacing the movable grow tables 16 (e.g., the greenhouse can have a plurality of movable grow tables 16, where each movable grow table 16 has its own gravity irrigation device 18). The irrigation system 10 can thus allow watering the plants 12 without involving a physical coupling or connection for water supply and/or pressure supply, which would be the case if a pump or valves were used.

Now referring more particularly to Figures 2 to 6, there is shown in more details a gravity irrigation device 18 of an irrigation system 10, in accordance with an embodiment. The reservoir 20 is configured to receive water therein. The water can include additional compounds, such as fertilizers and/or nutrient supplements, that are suitable for improving plant growth. In one implementation, the reservoir 20 includes an outlet 22 which is formed in a lower section 24 thereof. The outlet 22 is located above the growing media 14, or above the pots or containers 13, in which the plurality of plants 12 are growing, so as to provide head pressure. The main header 26 is in fluid communication with the outlet 22 of the reservoir 20 and is configured to receive a flow of water therefrom. The main header 26 includes a plurality of header outlets 28 along a length 30 thereof. The plurality of microtubes 32 respectively extend from the plurality of header outlets 28 and are configured to receive a head-pressurized flow of water from the main header 26 for flow through the microtubes 32. In one implementation, each microtube 32 upwardly extends from a corresponding header outlet 28, so as to evenly water the plants 12 using gravity, from a lower point upwardly toward the plants. Each microtube 32 has a microtube outlet 34 which can be positioned proximate to a corresponding plant 12 such that the microtubes 32 expel water from the microtube outlets 34 to evenly irrigate the plants 12. In one implementation, each microtube outlet 34 is located above its respective header outlet 28, so as to evenly distribute the water to the many plants 12 on the movable grow table 16.

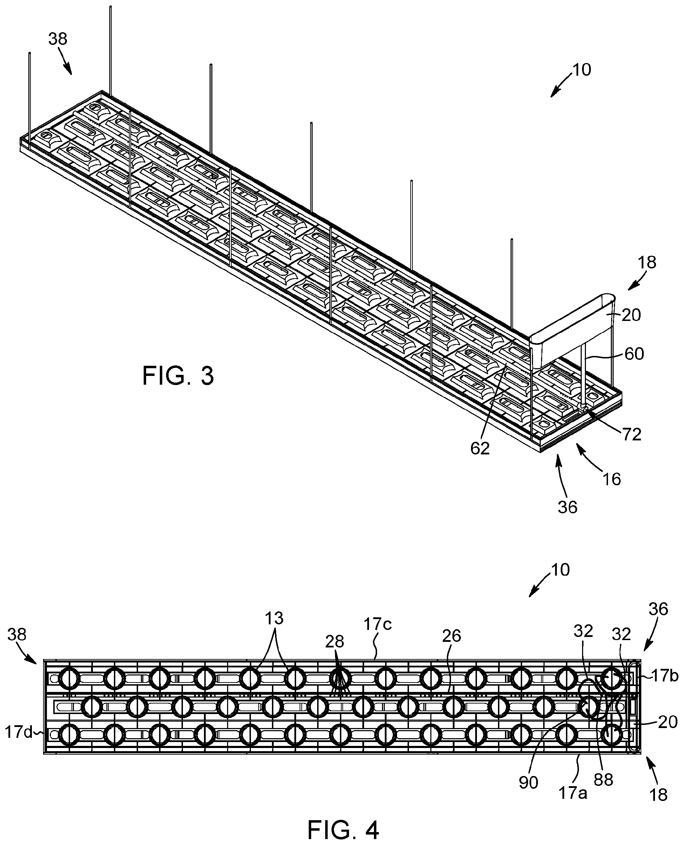

Still referring to Figures 3 to 6, there is shown that the movable grow table 16 extends longitudinally and has a first table end 36 and a second table end 38. The movable grow table 16 also has four sidewalls 17a, 17b, 17c, 17d. In one implementation, the reservoir 20 can be located at the first table end 36, as shown. Alternatively, the reservoir 20 can be located at the second table end 38 or between the first table end 36 and the second table end 38, as long as it provides the required head pressure. More than one reservoir 20 can be coupled to a movable grow table 16 and displaced therewith, depending on the length of the movable grow table 16 and the number of plants 12 to be watered.

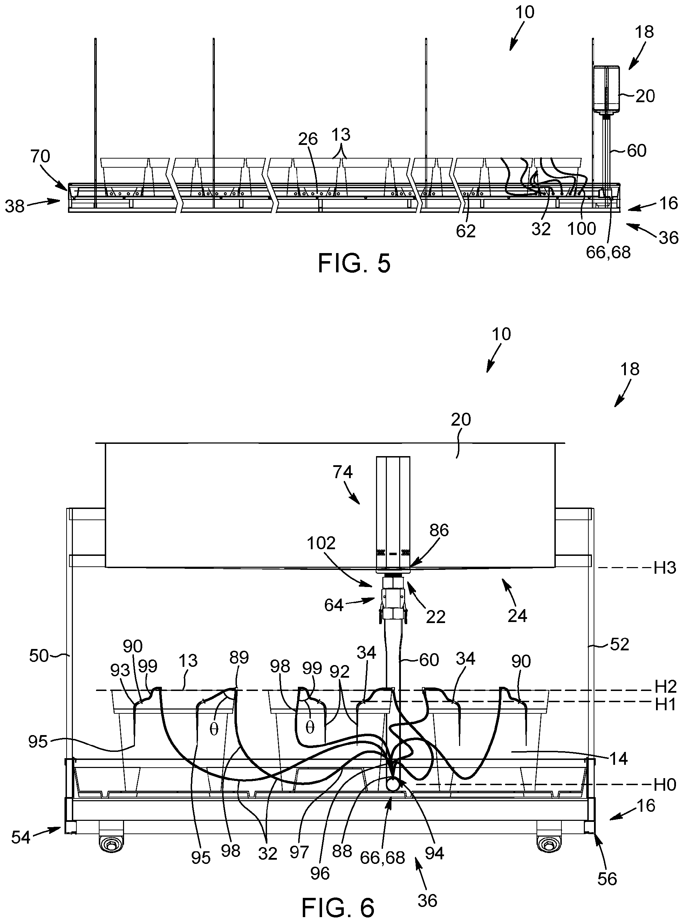

Indeed, the reservoir 20 is located at a pre-determined height above the growing media 14 (or above the main header 26) so as to provide the head pressure sufficient to expel water from the microtube outlets 34 and evenly irrigate the plants 12 (e.g., the outlet 22 of the reservoir 20 can be located at level H3 above the main header 26, as shown in Figure 6). In some implementations, the head pressure can be between about 5.0 and about 0.20 meters (i.e., between about 49.02 kPa and about 1.96 kPa), between about 4 and about 0.30 meters (i.e. between about 39.22 kPa and about 2.94 kPa), between about 3 and about 0.40 meters (i.e. between about 29.41 kPa and about 3.92 kPa) or between about 2 and about 0.50 meters (i.e. between about 19.61 kPa and about 4.90 kPa). The reservoir 20 is located above the outlets to water the plants 12 using gravity, although particular head values can be provided using a certain reservoir height and can be based on the pressure drop experienced by the water up to the outlet.

Still referring to Figure 2, the irrigation system 10 further includes a reservoir support 40, which downwardly extends from the reservoir 20. The reservoir support 40 is mounted to the movable grow table 16. In one implementation and as shown in Figure 2, the reservoir support 40 has a reservoir end 42, which is coupled with the reservoir 20, as well as a table end 44, which is coupled with the movable grow table 16.

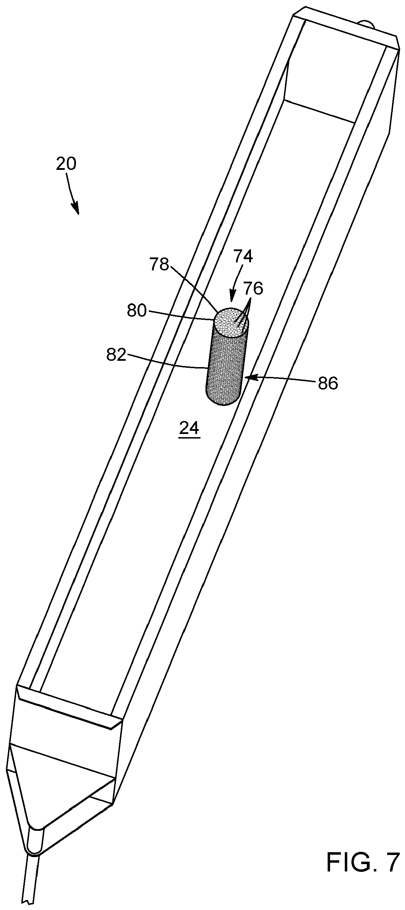

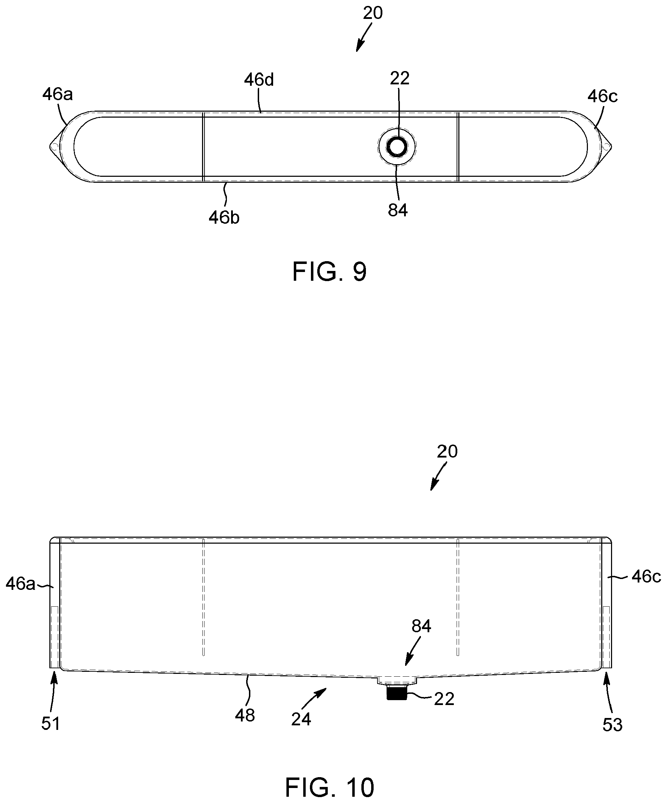

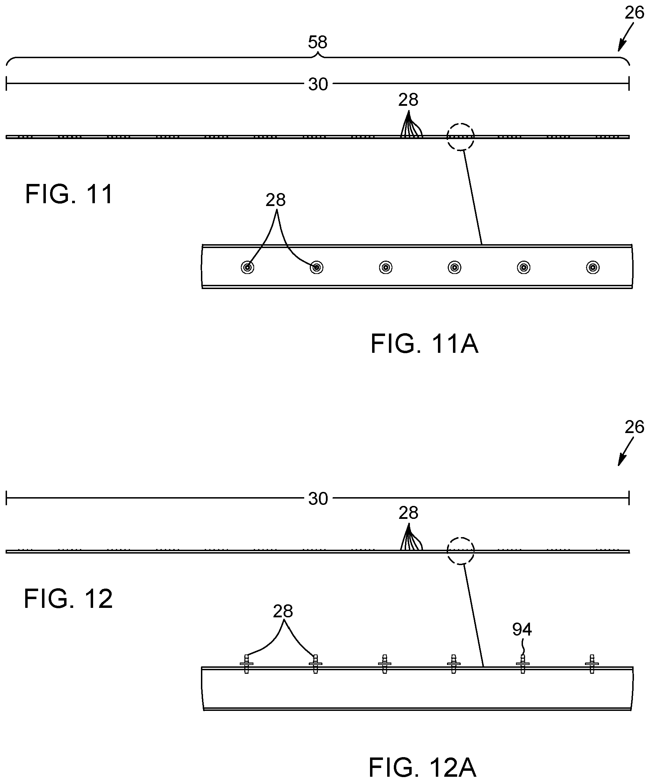

Referring more particularly to Figures 3 to 11, the reservoir 20 has sidewalls 46a, 46b, 46c, 46d, which are mounted to a bottom wall 48. In one implementation, the reservoir support 40 includes a first rod 50, which downwardly extends from sidewall 46a of the reservoir 20 and a second rod 52, which downwardly extends from sidewall 46c of the reservoir 20. The first rod 50 has a first rod end 54 which is being coupled with sidewall 17a of the movable grow table 16, while the second rod 52 has a second rod end 56 which is being coupled with sidewall 17c of the movable grow table 16, using known mechanical fasteners and/or coupling members for example. In some implementations, the first and second rods 50, 52 can be releasably coupled with the sidewalls 46a, 46b, 46c and/or 46d and/or bottom wall 48 of the reservoir 20, while the first and second rod ends 54, 56 can be releasably coupled with the sidewalls 46a, 46b, 46c and/or 46d of the movable grow table 16. Accordingly, in some implementations, the reservoir 20 can be releasably coupled to the movable grow table 16 for facilitating installation, removal and maintenance (washing, repairing, replacing, etc. of the reservoir 20). As best illustrated in Figures 7, 8, 9 and 10, the reservoir 20 includes a downwardly-opened first rod-receiving channel 51 which extends from the sidewall 46a and a downwardly-opened second rod-receiving channel 53 which extends from the sidewall 46c. The downwardly-opened first rod-receiving channel 51 and the downwardly-opened second rod-receiving channel 53 are shaped, sized and/or configured so as to receive the upper ends of the first and second rods 50, 52. By gravity, the reservoir 20 can remain strongly supported by the first and second rods 50, 52 and thus, by the movable grow table 16. More particularly, the reservoir 20 can be coupled to the movable bed of the movable grow table 16. The gravity irrigation device 18 and the movable bed of the movable grow table 16 can therefore be displaced, relative to the main structure fixed to the ground surface of the greenhouse, as a unit.

Now referring more particularly to Figures 3 to 6, 11 and 12, there is shown that the main header 26 can extend over top of the movable grow table 16 and includes an irrigation section 58, which corresponds to the section that comprises the header outlets 28. The irrigation section 58 usually runs the length of the movable grow table 16, but it is understood that it can have a length being less or more the length of the movable grow table 16. In the implementation shown in Figures 3 to 6, 11 and 12, the main header 26 includes a substantially vertical section 60, which downwardly extends from the reservoir 20, and more particularly, from the outlet 22. The main header 26 further includes a substantially horizontal section 62, which comprises the irrigation section 58, and which extends from the vertical section 60 at an angle. Even though the angle can be between about 45 degrees and about 135 degrees, in the illustrated implementation, the angle is about 90 degrees. The substantially horizontal section 62 therefore perpendicularly extends from the substantially vertical section 60. Indeed, the vertical section 60 extends longitudinally and vertically and has a vertical section first end 64, which extends from the outlet 22 of the reservoir 20, as well as a vertical section second end 66. The horizontal section 62 extends longitudinally and horizontally and has a horizontal section first end 68, which extends from the vertical section second end 66, and a horizontal section second end 70. Still referring to the embodiment of Figures 3 to 6, 11 and 12, the vertical section second end 66 is coupled, and more particularly, releasably coupled, to the horizontal section first end 68. Accordingly, the main header 26 further includes a coupling member 72, which is shaped, sized and/or configured for coupling, in a watertight configuration, the horizontal section first end 68 to the vertical section second end 66, or vice versa. In this implementation, only the horizontal section second end 70 is being capped.

In one implementation, and as best shown in Figure 3, the main header 26 can be secured to the movable grow table 16 using suitable mechanical or chemical fasteners for example, for preventing its displacement relative to the movable grow table 16. The main header 26 can take any shape, size and/or configuration, as long as it provides for fluid communication with the outlet 22 of the reservoir 20, as it provides water pressure to build therein, and as it includes the plurality of header outlets 28 to provide the head-pressurized flow of water to the microtubes 32 for flow therethrough, such that the plants 12 can be evenly watered or irrigated. As shown, in one implementation, the main header 26 can be coupled to the outlet 32 of the reservoir 20 so as to receive water at vertical section first end 64. However, in other implementations, the main header 26 can be a single pipe or tube coupled to the outlet 22 of the reservoir 20. The pipe can be a flexible pipe or alternatively, a substantially rigid pipe or tubing defining the substantially vertical and horizontal sections 60, 62. Moreover, it is understood that the main header 26 or pipe or tube can be made of one section only, or of more than one sections connected one to the other.

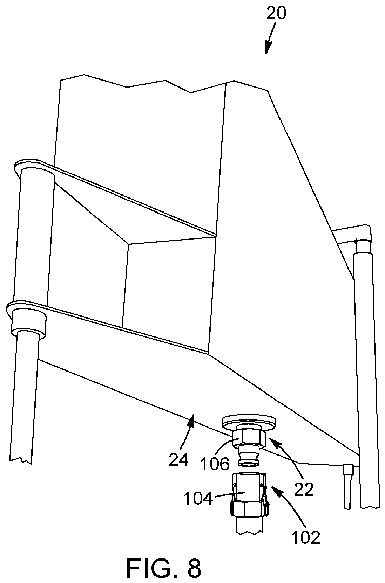

Even though the Figures illustrate the main header 26 as being connected to the outlet 22 of the reservoir 20 via first end 64, the main header 26 can be connected to the outlet 22 of the reservoir 20 via opposite end 70. In one implementation, the main header 26 can be coupled to the reservoir 20 using a quick connect mechanism 102, as best shown in Figures 6 and 8, that would allow its efficient connection, disconnection (e.g., removal for cleaning purposes, etc). As illustrated in Figure 8, a first portion 104 of the quick connect mechanism 102 can be provided at the first end 64 of the main end 26 and can be configured to releasably connect with a second portion 106 of the quick connect mechanism 102, which can be coupled with the outlet 22 of the reservoir 20. Moreover, it is to be understood that, in one implementation, a first end of the main header 26 can be coupled to a first reservoir located at the first table end 36, for example, while a second opposed end of the main header 26 can be coupled to a second reservoir located at the second table end 38, for example. In one implementation, both ends of the main header can be capped, and the reservoir 20 can be provided in fluid communication with the main header 26 between its opposite ends (as shown in Figure 2).

In some implementations, the length of the main header 26 can be between about 15 meters and about 1 meter, between about 13 meters and about 3 meters, between about 10 meters and about 5 meters or between about 8 meters and about 6 meters. More particularly, the length of the substantially horizontal section 62 of the main header 26 (or of the irrigation section 58) can be between about 15 meters and about 1 meter, between about 13 meters and about 3 meters, between about 10 meters and about 5 meters or between about 8 meters and about 6 meters. As long as the head-pressurized flow of water which is expelled from the microtube outlets 34 is less than the flow of water which is provided to the main header 26, the main header 26 or the substantially horizontal section 62 can be as long as needed to water the plants 12.

In one implementation, the diameter (i.e., inner diameter) of the main header 26 can be between about 100 mm and about 5 mm, between about 80 mm and about 10 mm, between about 60 mm and about 20 mm or between about 40 mm and about 25 mm. More particularly, the diameter of the substantially horizontal section 62 of the main header 26 can be between about 100 mm and about 5 mm, between about 80 mm and about 10 mm, between about 60 mm and about 20 mm or between about 40 mm and about 25 mm. As mentioned above, as long as the head-pressurized flow of water which is expelled from the microtube outlets 34 is less than the flow of water which is provided to the main header 26, the inner diameter of the main header 26 or of the substantially horizontal section 62 can be as needed to water the plants 12.

In one implementation, the reservoir 20 can be an opened-top reservoir. In one implementation, the reservoir 20 can be a closed reservoir with a cover or lid and can be made from a material that prevents UV rays to penetrate and reach the water provided therein. The lid can be removable for filling with water, or there can be an inlet in the lid or another part of the reservoir for receiving water to fill the reservoir. The main header 26 can also be made from a material that prevents UV rays to penetrate and reach the flow of water travelling therein. The microtubes 32 can further be made from a material that prevents UV rays to penetrate and reach the head-pressurized flow of water travelling therein.

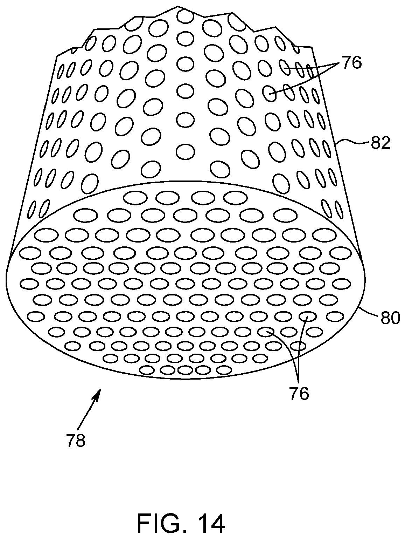

In one implementation, and referring now more particularly to Figures 5, 6 to 10 and 14, the irrigation system 10 can further include a filter or strainer 74, which is configured so as to prevent oversized debris from reaching the microtubes 32 (or to prevent accumulations of smaller particulates in microtubes 32). The filter 74 can be located in the reservoir 20. Alternatively, the filter 74 can be located in the main header 26. The irrigation system 10 can also include more than one filter.

In one implementation and still referring to Figures 5, 6 to 10 and 14, the filter 74 is located in the reservoir 20 and is superposed to the outlet 22 of the reservoir 20 (i.e., the filter 74 covers the outlet 22 of the reservoir 20) so as to prevent debris from reaching the outlet 22 or the reservoir 20. The filter 74 includes a plurality of pores 76 which are shaped, sized and/or configured to permit the water to flow therethrough. In the embodiment shown, the filter 74 is a basket which has a top wall 78 defining a periphery 80, as well as a sidewall 82 extending downwardly therefrom. Both the bottom wall 78 and the sidewall 82 of the filter 74 include the spaced apart pores 76.

In one implementation, and still referring to Figures 5, 6 to 10 and 14, the reservoir 20 can include a filter receiving section 84 which is formed in the lower section 24 thereof. A lower portion 86 of the filter 74 can therefore be received within the filter receiving section 84 of the reservoir 20, and optionally, be secured therein. The filter 74 can therefore cover the outlet 22 of the reservoir 20, with the sidewall or filter wall 82 which extends upwardly from the filter receiving section 84. As illustrated, both the top wall or filter end 78 and the sidewall or filter wall 82 can include the pores 76. The lower portion 86 of the filter 74 can releasably be received within the filter receiving section 84 of the reservoir 20. The filter 74 can therefore be easily installed and removed for cleaning purposes. The pores 76 are configured and sized so as to prevent the oversized debris to reach the main header 26, and the microtubes 32. Accordingly, the pores 76 can be smaller than the microtubes 32.

The filter 74 can take any shape, size and/or configuration, as long as it prevents oversized debris from reaching the microtubes 32. Indeed, in one implementation, the filter can be plate-shaped or replaced by a membrane, both configured to fit in the filter receiving section 84, or alternatively, to fit the outlet 22 of the reservoir 20.

In one implementation, each pore 76 can define a pore width of between about 0.2 mm and about 1.8 mm, between about 0.4 mm and about 1.6 mm, between about 0.6 mm and about 1.4 mm, or between about 0.8 mm and about 1.2 mm. The pores need to be smaller than the microtube outlets 34. The reservoir 20, the main header 26, the microtubes 32 and/or the filter 74 can be made from a foodgrade material. In one implementation, the reservoir 20 and/or the filter 74 can be made of stainless steel, while the irrigation lines (i.e., the main header 26 and the microtubes 32) can be made of a foodgrade polymeric material (e.g., a plastic with additives to protect the material from UV rays to penetrate and reach water, thus preventing the growth of algae in the lines).

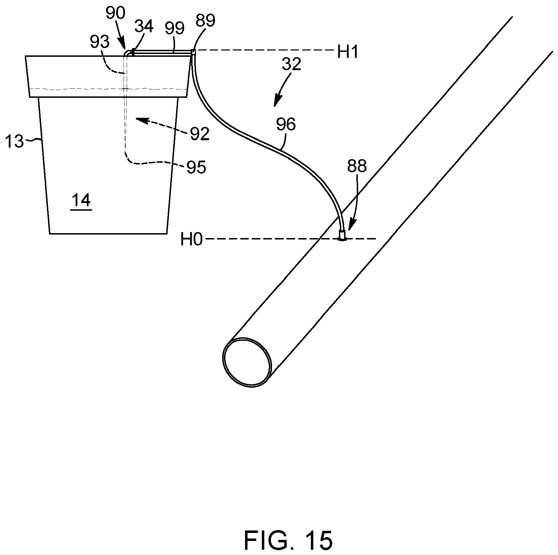

As mentioned above, in one implementation, the microtube outlets 34 can be positioned above the main header 26 so that pressure can build and the microtube outlets 34 can distribute water evenly to the plants 12. More particularly, sections of the microtubes 32 which are adjacent to the main header 26 upwardly extend from the respective header outlets 28 so that pressure can build and the microtube outlets 34 can distribute water evenly to the plants 12. According to this configuration, the microtubes 32 can expel water to evenly irrigate the plants 12. In one implementation, the sections of the microtubes 32 which are adjacent to the main header 26 upwardly extend from the respective header outlets 28 and the growing media 14 (and the plants 12) is located above the main header 26. The microtube outlets 34 are also configured to be positioned above the growing media 14. Alternatively, the microtube outlets 34 can extend down into the growing media 14 to reach the root systems of the plants 12. Each microtube 32 therefore extends between a microtube first end 88 and a microtube second end 90. In one implementation, so as to enhance even watering of the plants 12, each one of the microtubes 32 can have the same length or lengths that are similar (e.g., within 10% or 20% of each other). Water can then flow within the microtubes 32 along substantially the same length from the header outlets 28 to the microtube outlets 34, independently of the microtube 32 that is being used to irrigate the plant 12. The microtube first ends 88 are coupled to the main header 26, and more particularly, to the header outlets 28, so as to upwardly extend about the first ends 88 from the header outlets 28. The irrigation system 10 can further include a plurality of stakes 92. As best shown in Figure 15, each stake 92 has a first end 93 and a second end 95 and is shaped, sized and/or configured so as to provide and support a microtube 32, or microtube outlet 34, within the growing media 14 near the root systems of the plants 12, or alternatively, above the growing media 14 (Figures 6 and 15), as mentioned above . In one scenario, the microtube second ends 90 can be located above the growing media 14 (Figures 6 and 15) to allow water to be expelled from the microtube outlets 34 so as to flow downwardly from the outlets 34 towards the growing media 14 to percolate therethrough. In one scenario, and as best shown in Figure 15, the first ends 93 of the stakes 92 can extend from the microtube second ends 90, and the second ends 95 of the stakes 92 can be inserted into the growing media 14 to support the microtube outlets 34 above the growing media 14. The microtube outlets 34 can be oriented to face horizontally, as shown in Figure 15, as the termination of a horizontal section of the microtube extending from the angle. Alternatively, the microtube outlets 34 could be oriented to face other directions, e.g., downward. The microtube second end 90 can thus be connected to a respective stake 92 that can be pushed down, into the growing media 14 and about a respective plant 12, or respective plants 12. By providing the microtube second ends secured to respective stakes, the microtube outlets can remain spaced-away from the growing medium to avoid soiling, placement of the stakes into the medium can facilitate quick positioning the microtube outlets at the desired height, and the water flowing out of the microtube outlets can flow down the respective stakes into the medium.

Each microtube 32 defines a microtube diameter (i.e., internal diameter) which has a smaller diameter, in its entirety, than the main header diameter. In one implementation, the microtube diameter can be between about 10 mm and about 1 mm, between about 8 mm and about 2 mm, between about 6 mm and about 3 mm or between about 4 mm and about 3.2 mm. The ratio main header diameter: microtube diameter can be such that the head pressure is sufficient to evenly irrigate the plants 12. In one implementation, the ratio main header diameter: microtube diameter can be between about 15 and about 2, between about 12 and about 4 or between about 10 and about 6. The ratio of importance is the drip diameter (i.e., smallest point for the water to flow through) to the main header 26, which corresponds to the location where the pressure builds.

In one implementation, and as shown in Figure 6, the highest points of the microtubes 32 can be located or positioned at generally the same level or similar level (e.g., within 1 mm, 2 mm, 5 mm, 10 mm, 15 mm or 20 mm of each other) above the main header 26 (e.g., level H2 in Figure 6 or H1 in Figure 15). In one implementation, the microtube outlets 34 can be located or positioned at generally the same level (e.g., within 1 mm, 2 mm, 5 mm, 10 mm, 15 mm or 20 mm of each other) above the main header 26 (e.g., level H1, which is found below level H2 in Figure 6 of level H1 which corresponds to the level of the highest points of the microtubes in Figure 15). For example, and as shown in Figure 6, the outlet 22 of the reservoir 20 can be located at level H3, above the microtube outlets 34, to water the plants 12 using gravity. All of the highest points (i.e., the angled elbows 89) of the microtubes 32 can be positioned at level H2, while all of the microtube outlets 34 can be located at level H1. The microtube outlets 34 can therefore be located at generally the same height above the level of the main header 26 (level H0). This configuration of the irrigation system 10, providing the highest points of the microtubes 32 at generally the same level above the main header 26, and also the microtube outlets 34 at generally the same level above the main header 26 and below level H2 (Figure 6), can facilitate evenly watering the plants 12. It is nevertheless noted that the microtubes could also be arranged differently, e.g., such that the high points are at different levels while the microtube outlets are at a generally same level, or with other different arrangements and positioning of the microtubes, as illustrated in Figure 15.

The irrigation system 10 further includes a plurality of microtube connections 94 which are shaped, sized and/or configured to connect, in a watertight configuration, the microtubes 32, or microtube first ends 88, to the respective header outlets 28. It is to be mentioned that the header outlets 28 that are not coupled with microtubes 32 can, in some implementations, simply be capped using a conventional plug or cap, so as to make sure that the flow of water from the reservoir 20 will come out from the microtubes outlets 34. In one implementation, the gravity irrigation device can be perfectly watertight (i.e., the entirety of the volume of water that is introduced into the reservoir 20 will be expelled from the microtube outlets 34). In one implementation, the microtube connections 94 can include conventional free-flowing barb connections or any suitable mechanical connectors which can connect a microtube first end 88 to a header outlet 28 in a substantially watertight configuration.

Now referring more particularly to the embodiment of Figure 6, in one implementation, each microtube or drip line 32 can include a microtube first member 96 that preferably extends upwardly from the main header 26 found at level H0, a microtube second member 97 which may extend downwardly from the microtube first member 96, a microtube third member 98 which may extends upwardly from the microtube second member 97 and a microtube fourth member 99 (which can also be referred to as an end member) which may extend downwardly from the microtube third member 98, at level H2 for example, at the microtube angle θ or angled elbow 89. Thus, in a watering cycle, once the reservoir 20 has been filled, water can flow from the outlet 22 of the reservoir 20 to fill the main header 26, which is positioned at level H0. As water accumulates in the main header 26 and liquid pressure builds, water can be forced to flow upwardly through the microtube first members 96 of the plurality of irrigation microtubes 32, to flow downwardly through the microtube second members 97, to flow upwardly again through the microtube third members 98 until the highest points of the microtubes 32 (i.e., level H2) and then, to flow downwardly again through the microtube fourth members 99 of the microtubes 32 and, finally, towards the microtube outlets 34, which can be supported by the first ends 93 of the stakes 92 located at level H1, so as to enhance even watering of the growing media supporting the plants 12. It is noted that the microtube first, second, third and/or fourth members 96, 97, 98, 99 can take various shapes, sizes and/or configurations, some of which will be described herein. In one scenario, the microtubes 32 can have a length of between about 10 centimeters and about 10 meters, of between about 25 centimeters and about 5 meters, of between about 50 centimeters and about 2 meters, or of between about 60 centimeters and about 1 meter. In some implementations, the microtube fourth members 99 of the microtubes 32 can have a length of between about 2 centimeters and about 20 centimeters, of between about 4 centimeters and about 15 centimeters, or of between about 5 centimeters and about 10 centimeters. The microtube angle θ, provided at the angled elbow 89, can be such as to minimize or prevent the siphoning action which would bring back the head-pressurized flow of water into the main header 26 after head pressure has dropped, at the end of a watering cycle for example. In such scenario, the lowest microtube outlet 34 would get all the water remaining in the gravity irrigation device 18 (i.e., in the loop), which could incommode the adjacent plant 12. Accordingly, in some implementations, the microtube angle θ can be between 70 degrees and 110 degrees, between 80 degrees and 100 degrees, or another angle. More particularly, the microtube angle can be about 90 degrees.

In one implementation, each irrigation microtube 32 can include its 90-degree free flow elbow 89 about its microtube second end 90. A first purpose of the 90-degree free flow elbow 89 can be to provide the user with a guide to push the second ends 95 of the stakes 92 at the suitable level below the growing media surface (the microtube second ends 90 of the microtubes 32 need to be at the same level above the growing media surface so as to evenly distribute water between the plants 12, for example). A second purpose of the 90-degree free flow elbow 89 can be to, as previously described, minimize siphoning action, which would bring back the water into the main header 26 after water pressure has dropped (at the end of a watering cycle for example). As mentioned above, all of the 90-degree free flow elbows 89 can be located at the same level H2. However, in one implementation, one or more of the 90-degree free flow elbows 89 (e.g., the one(s) near a table end) can be provided at a higher level (i.e., higher than level H2) so as to minimize the siphoning action by also providing the respective microtube outlets 34 higher than level H1.

Referring now more particularly to Figure 15, in one implementation, the microtube or drip line 32 can be oriented differently compared to the implementation shown in Figure 6. In Figure 15, the microtube 32 can include the microtube first tube 96 which upwardly extends from the main header 26 found at level H0, and the microtube end member 99 which extends from the microtube first member 96 at the angled elbow 89 so as to provide the microtube angle θ. As shown in Figure 15, the angled elbows 89 of the microtubes 32 can be positioned at level H 1, which corresponds to the highest points of the microtubes 32. The microtube end member 99 can be straight and/or perpendicular to a vertical axis. The microtube end member 99 can have a slight downward slope so the microtube outlet 34 can be positioned below the angled elbow 89 (i.e., below level H1). The microtube first member 96 can take any shape, size and/or configuration, as long as a microtube angle θ is provided between the microtube first member 96 and the microtube end member 99 (at angled elbow 89), and also, as long as the microtube outlet 34 is positioned above the main header 26. Indeed, the microtube first member can form various curves, upward or downward turns, according to the natural configuration it takes after it has been installed or based on a predetermined or designed arrangement. In one scenario, the microtube first member 96 can also have a section which upwardly extends from the header outlet 28. Thus, in a watering cycle, once the reservoir 20 has been filled, water can flow from the outlet 22 of the reservoir 20 to fill the main header 26, which is positioned at level H0 (Figure 15). As water accumulates in the main header 26 and liquid pressure builds, water can be forced to flow upwardly through the microtube first members 96 of the plurality of irrigation microtubes 32, to flow through the angled elbows 89 (highest points H1) and then to flow through the microtube end members 99 towards the microtube outlets 34, which can be located at level H1 or below, as long as they are located above the main header 26.

Still referring to the implementation of Figure 15, in one scenario, the highest points (here, the angled elbows) of the microtubes 32 can be positioned at level H1, while the microtube outlets 34 can be located above the main header (H0), for example, at level H1 or below. The microtube outlets 34 can therefore be located at generally the same height above the growing media 14 (or above the level of the main header 26 (level H0)). This configuration of the irrigation system 10, providing the angled elbows 89 of the microtubes 32 at generally the same level above the main header 26, and also the microtube outlets 34 at generally the same level above the main header 26 (which corresponds to the level of the highest points or below), can facilitate evenly watering the plants 12.

In one implementation, the microtubes 32 can be provided with drip emitters or other type of water dispersers. The drip emitters or dispersers can be positioned within the microtubes 32 or alternatively, coupled to microtube outlets 34. The flow rates from the microtube outlets 34 or from the drip emitters will be determined by the water pressure provided by the gravity irrigation device 10. Pressure-compensated drip emitters can therefore be provided, but not required by the present gravity irrigation device 18. For example, the flow rates coming out from the microtube outlets 34 can vary, depending on the varieties of plants that are being watered.

The irrigation can be performed from above the surface of the growing media 14, on the surface of the growing media 14 and/or below the surface of the growing media 14. When placed below the surface of the growing media 14 (i.e., sub surface), the microtube outlets 34 can be positioned at a depth which can be between about 10 cm and about 0.5 cm, between about 8 cm and about 1 cm, or between about 6 cm and about 1.5 cm. In one implementation, the irrigation can be performed sub surface, downwardly towards the root systems of the plants 12. Such configuration can, for example, prevent an accumulation of water on the surface of the growing media 14. When such accumulation occurs, mud can form, which can encourage growth of undesirable weeds, and/or cause technical limitations during the harvest time. The plants 12 can therefore be watered downwardly from the top of the growing media 14 (or from above the growing media as illustrated in Figures 6 and 15), as opposed to traditional flooding methods, where the plants are watered upwardly from the bottom of the growing media. This configuration can promote a healthier root system, as well as more even and consistent watering cycles. As mentioned above, the microtube outlets 34 can be located at the same level H1 as each other, above level H0 of the main header 26.

Additionally, as keeping a greenhouse environment as sterile as possible is one of the main factors in the success of a crop, the configuration of the irrigation system 10 can also prevent growth of bacteria, pathogens, insects and the like. Indeed, traditional movable grow table systems provide no choice other than to irrigate through ebb and flow. This conventional method of irrigation presents many downsides. It lacks irrigation control and water management within the crops substrate. Irrigating through capillary action can cause salt build, which can be detrimental to the crop. It increases risk of contamination from one plant to another (i.e., if one plant on the table has a pathogen, the entire crop can become at risk since the entire irrigation supply can be infected). It involves increased water usage and it is harder to control the closed loop recycled water system. Many other drawbacks exist (e.g., increased capital costs, environmental challenges, larger systems needed for disinfection and treatment of water, large amounts of standing water needed, which harbours algae growth, pathogens, insect breeding, increased humidity in the greenhouse during irrigation cycles, different root structures are developed (i.e., water roots), which makes the plants ability to uptake nutrients very difficult, etc.).

To the contrary, the irrigation system 10 described above combines the benefits of a movable grow table system with controlled drip irrigation to maximize production and efficiency of the greenhouse operations. The irrigation system 10 can be used in any crops growing on a movable grow table or tables, or growing on other structures. The gravity irrigation device 18 can further be easily retrofitted in an existing ebb and flow system, with little added infrastructure to the greenhouse.

Therefore, in operation, for irrigating the plants 12 that are growing in growing media 14, water can be provided in the reservoir 20, which is, as described herein, located above the movable table 16 and displaceable therewith. The water can then flow, by gravity, under a head pressure, from the outlet 22 of the reservoir 20 (level H3 shown in Figure 6), through the main header 26 (level H0), and upwardly into the microtubes 32, which are provided in fluid communication with the main header 26. Water can therefore expel from the microtubes 32 (level H1) into the plants 12 at an even distribution. As mentioned above, the microtube outlets 34 can be provided above the header outlets 28, for example. Moreover, as mentioned above, in one implementation, water can flow through the microtubes 32 so as to pass by level H2, prior being expelled from the microtube outlets 34 (level H1), as well illustrated in Figure 6. Alternatively, the microtube outlets 34 can be positioned at the highest level H1, as shown in Figure 15.

In some implementations, and as described herein, water can be subjected to filtration prior to flow into the main header 26 and/or into the microtubes 32. In some implementations, water can flow into a plurality of angled elbows 89 prior it is expelled from the microtubes 32 into the plants 12, so as to prevent siphoning action at the end of a watering cycle.

The irrigation system 10 as described herein can be used to irrigate a plurality of varieties of plants 12. The irrigation system 10 can be used to evenly water the plants of any appropriate crops or flowers. More particularly, the irrigation system 10 can be used to evenly water the plants of any crops, or flowers, that involve movable grow tables. For example, the irrigation system 10 as described herein can be used to irrigate flowering plants (e.g., Rosales, Orchidaceae, and the like), vegetable plants (e.g., cucumber plants, tomato plants, pepper plants, lettuce plants, eggplant plants, asparagus plants, bean plants, beet plants, broccoli plants, brussels sprouts plants, cabbage plants, cantaloupe plants, carrot plants, cauliflower plants, celery plants, collard plants, goji berry plants, kale plants, onion plants, pea plants, potato plants, radish plants, spinach plants, squash plants, sweet potato plants, and the like), fruit plants (e.g., rhubarb plants, strawberry plants, blueberry plants, blackberry plants, cantaloupe plants, and the like), etc. In some implementations, the irrigation system 10 described herein can be used to evenly water the plants of any indoor crops. In one implementation, the irrigation system 10 can even be used to irrigate cannabis plants. The configuration or design of the irrigation system 10 can thus be reviewed according to the plants that need to be irrigated (i.e., height and size of the reservoir, size/diameter of the reservoir outlet, diameter and/or length of the main header, number of header outlets, diameter of header outlets, number of microtubes, diameter of microtubes, length of microtubes, level of highest points of the microtubes, level of microtube outlets, depth of microtube outlets in growing media, pot sizes, etc.)

Thanks to the configuration of the gravity irrigation device 18, the plants 12 can be evenly watered or irrigated. Moreover, the main header 26 and the plurality of microtubes 32 can continuously be filled with water, preventing growth of bacteria, algae, mould, and the like. This can be important in some cultures (e.g., in the cannabis culture, where severe regulations are applicable).

The irrigation system 10 described herein also allows to evenly irrigate the plurality of plants 12 using the gravity irrigation device 18, while maintaining mobility of the plants 12 which are supported on, and displaced by, the movable grow tables. The number of non-efficient aisle ways can therefore be reduced, creating access aisle ways only when and where they are needed. The irrigation system 10 can additionally increase the growing space in the greenhouse, as the movable grow tables 16 and the gravity irrigation devices 18 can be displaced as units to different locations in the greenhouse, so that the plants 12 can be exposed to different conditions, such as lighting conditions.

Instead of coupling the gravity irrigation device(s) 18 to the movable grow table(s) 16, as described above, the gravity irrigation device(s) 18 can be provided proximate to the plurality of plants 12, but not necessarily coupled with a movable grow table 16 or grow table. In one implementation, the reservoir 20 can be positioned proximate to the plants 12 and supported above a ground surface, table, etc. with its outlet 22 provided above the growing media 14 in which the plurality of plants 12 are growing, as far as the head pressure can be provided. For example, the gravity irrigation device 18, instead of being coupled and supported by the movable grow table 16, can be supported by the ground surface, a table and the like. For example, the reservoir 20 can be supported by wheels, rollers, etc. and displaceable relative to the ground surface of the greenhouse so it can be positioned wherever needed (above plants laying on the ground for example).

In the above description, the term "irrigation" refers to the provision of water to the plant so that it is absorbed by the plant, or to the growing media to be stored and eventually absorbed by the plants. It will be appreciated that the water provided to the plants may not be entirely absorbed by the plant and/or growing media. In some circumstances, it may be desirable for at least a portion of the water dispensed by the gravity irrigation device that is not absorbed by the plant and/or growing media, i.e. the non-absorbed water or excess water, to be drained away from the growing media to be discarded.

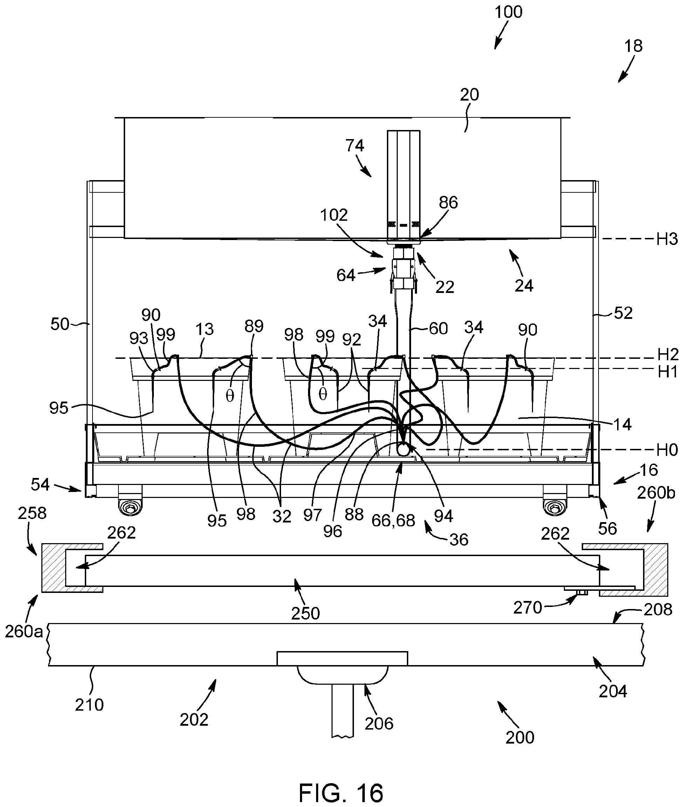

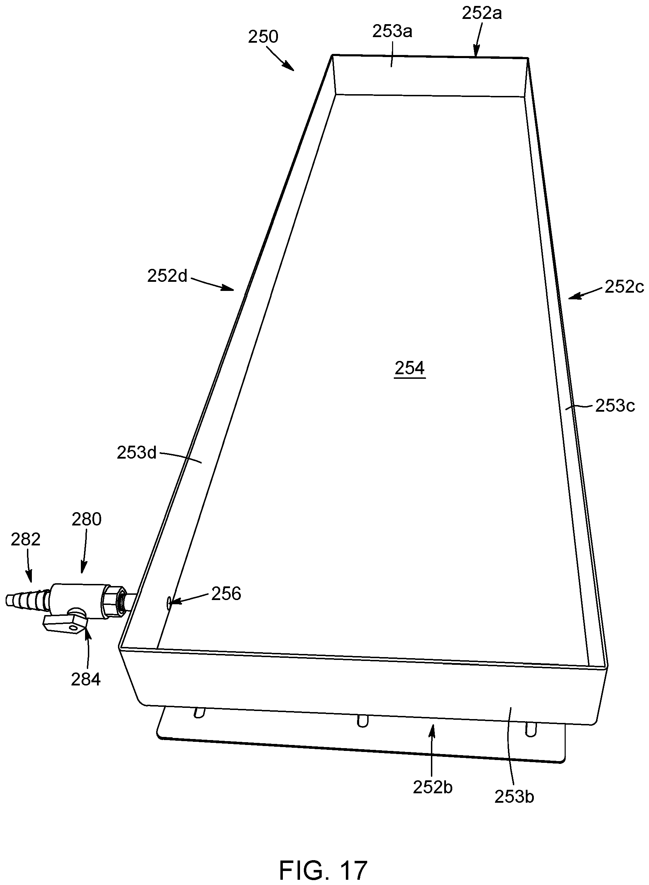

Turning now to Figures 16 to 18, there is provided an irrigation system 100, configured in accordance with another embodiment. The irrigation system 100 is substantially similar to the irrigation system 10 described above. In addition to the movable grow table 16 and the gravity irrigation device 18 described above, the irrigation system 100 includes a water drainage system 200 for receiving and disposing of excess water flowing down from the containers 13.

In this embodiment, each container could include one or more drain openings defined in a sidewall and/or a bottom wall of the containers to allow the non-absorbed water to drain from the containers 13 by gravity. Instead of including drain openings, the sidewall and/or bottom wall of the containers 13 could instead be made of a porous material which would allow excess water to exit the containers 13. The containers may further include an open top through which the non-absorbed water could exit the containers if the containers were to overflow.

The water drainage system 200 further includes a drain assembly 202 positioned below the movable grow table 16 to receive the excess water and direct the excess water away from the movable grow table 16. In the embodiment illustrated in Figures 16 to 18, the drain assembly 202 includes an upper water receiving container 204 and at least one drain 206 extending downwardly from the upper water receiving container 204. In the present embodiment, the upper water receiving container 204 has an open top 208 to receive the excess water exiting the containers 13, and the drain 206 is in fluid communication with the upper receiving container 204. Each drain 206 may operatively be coupled to a local sewer system for disposal of the excess water. Alternatively, the excess water could be stored in a storage container for subsequent disposal or could be re-used in the irrigation system 100 to irrigate the plants 12, either by directly providing the excess water into the reservoir 20 of the gravity irrigation device 18 or by first treating the excess water before providing it into the reservoir 20.

In one embodiment, the upper water receiving container 204 has a bottom face 210 which is substantially planar and slightly angled towards the drain 206 to funnel the excess water towards the drain 206. Alternatively, the bottom face 210 could have any other suitable shape and configuration.

In the embodiment illustrated in Figure 16, the upper water receiving container 204 is elongated and extends substantially perpendicularly to a longitudinal axis of the movable grow table 16. Still in this embodiment, the upper water receiving container 204 has a length which is greater than a width of the movable grow table 16. Specifically, when used in a greenhouse in which multiple movable grow tables are provided as shown in Figure 1, the upper water receiving container 204 could extend under a plurality of the movable grow tables 16 so as to collect excess water therefrom. This configuration may eliminate the need for each irrigation system 100 in a greenhouse to be provided with its own water drainage system 200.

The movable grow table 16 could be hollow and could include a water collection cavity defined in the movable grow table 16. Specifically, the movable grow table 16 could include one or more inlet openings defined in a top receiving surface of the table 16 on which the containers 13 are received. In this embodiment, the inlet openings are in fluid communication with the water collection cavity to allow the non-absorbed water exiting the containers 13 to be collected in the water collection cavity. Still in this embodiment, the movable grow table 16 could further include one or more outlet openings defined in a bottom surface of the table 16. The outlet opening(s) are in fluid communication with the water collection cavity and are substantially vertically aligned with the upper receiving container 204 to allow excess water collected in the water collection cavity to flow downwardly by gravity through the outlet opening(s) and into the upper receiving container 204.

In one embodiment, the outlet opening(s) includes a plurality of outlet openings which are distributed substantially evenly along the bottom surface of the table 16. In this embodiment, the upper water receiving container 204 extends across an entire surface area of the movable grow table 16 to receive excess water from all the outlet openings.

In other embodiments, instead of being distributed substantially evenly along the bottom surface of the table 16, the outlet openings could instead be located on a specific portion of the bottom surface of the table 16. In this embodiment, the upper water receiving container 204 may not extend across an entire surface area of the movable grow table 16 and could instead only be sized and shaped to be vertically aligned with the specific portion of the bottom surface in which the outlet openings are located to receive the excess water flowing down from the outlet openings.

Alternatively, the movable grow table 16 may not include a hollow structure and may instead include a mesh, a grate, spaced-apart bars, or any type of permeable structure which would allow the excess water to flow down from the containers 13 through the movable grow table 16 and into the upper water receiving container 204 below.

The water drainage system 200 further includes a non-absorbed or excess water collecting container 250 removably positionable between the movable grow table 16 and the drain assembly 202. The excess water collecting container 250 is configured to be selectively positioned between the movable grow table 16 and the drain assembly 202 to collect the excess water flowing from the containers 13 and removed from the water drainage system 200 to allow excess water to flow freely from the plant containers 13 to the drain assembly 202 below during normal operation of the water drainage system 200. It will be understood that collecting the excess water during a watering cycle of the irrigation system 100 could allow a user to gather information regarding a status of the plants 12, the growing media 14 and/or the irrigation system 100. For example, the excess water could be collected in the excess water collecting container 250 during a watering cycle and a quantity of the collected excess water could be subsequently determined. More specifically, the excess water collected in the excess water collecting container 250 could be transferred into a volume measuring device such as a measuring tube to determine the quantity of excess water by determining a volume of the excess water, or onto a scale to determine the quantity of excess water by weighing the excess water. Alternatively, instead of the excess water being transferred out of the excess water collecting container 250 and into a measuring device, the excess water collecting container 250 could include graduations to allow the volume of the excess water to be measured directly in the excess water collecting container 250, or could include a scale integrated into the bottom wall 254 or otherwise to allow the excess water to be weighed directly in the excess water collecting container 250.

In some circumstances, the irrigation system 100 may be adjusted according to the quantity of excess water collected during the watering cycle to vary a quantity of water or flowrate during the watering cycle or the duration or frequencies of the watering cycles. In some embodiments, the color, chemical composition, pH value and/or any other characteristic of the collected excess water could further provide information regarding the status of the plants 12, the growing media 14 and/or the irrigation system 100. In some circumstances, this information could lead the user to provide specific care to the plants 14 or to add one or more suitable additives to the water in the water reservoir 20.

In the illustrated embodiment, the excess water collection container 250 is substantially rectangular and elongated, and extends between first and second short sides 252a, 252b which extend substantially parallel to each other, and first and second long sides 252c, 252d extending substantially parallel to each other and substantially perpendicular to the first and second short sides 252a, 252b. The excess water collection container 250 further includes first and second short side walls 253a, 253b and first and second long side walls 253c, 253d, which extend respectively along the first and second short sides 252a, 252b and the first and second long sides 252c, 252d, and a bottom wall 254.

The excess water collection container 250 further includes an outlet opening 256 defined in the first long sidewall 252c. Specifically, the outlet opening 256 is located adjacent the bottom wall 254 to allow excess water collected in the excess water collection container 250 to be drained out of the excess water collection container 250 through the outlet opening 256 by gravity. In the illustrated embodiment, the outlet opening 256 is substantially circular but in other embodiments, the outlet opening 256 could have any other suitable shape.

In the illustrated embodiment, the excess water collection container 250 further includes a tap member 280 operatively coupled to the outlet opening 256 to selectively allow and prevent excess water from flowing out of the excess water collection container 250 through the outlet opening 256. Specifically, the tap member 280 includes a spout 282 extending away from the first long sidewall 252c and a valve 284 operatively coupled to the spout 282. The valve 284 may be set in a closed position as the excess water is collected in the excess water collection container 250 and can be set in an open position to transfer the collected excess water into a measuring device.

In the illustrated embodiment, the valve 284 can be operated, i.e. selectively opened and closed, manually by a user. In other embodiments, the valve 284 could instead be actuated by an actuator operatively connected to a controller. In this embodiment, the controller could be configured to receive manual input commands to open or close the valve 284 or could be programmable to automatically move the valve 284 between the open and closed position according to a predetermined scheme.

In the illustrated embodiment, the excess water collecting container 250 is removably mounted to a mounting structure 258. The mounting structure 258 could form part of the main structure of the movable tables 16 supporting the table's movable beds or could form an additional structure distinct from the main structure.

In the illustrated embodiment, the mounting structure 258 includes first and second spaced-apart C-shaped rails 260 which extend generally parallel to each other. Each rail 260 includes a rail channel 262 extending along the rail 260, and the rail 260 are oriented such that the rail channels 262 of both rails 260 face towards each other.

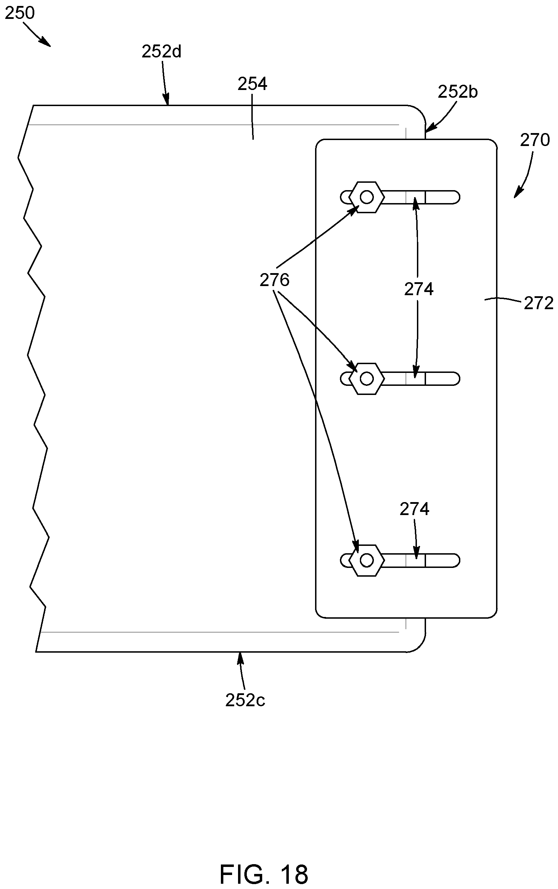

Still in the illustrated embodiment, the excess water collecting container 250 further includes a mounting bracket 270 for engaging at least one of the first and second rails 260a, 260b. As best shown in FIG. 18, the mounting bracket 270 includes a movable plate 272 slidably connected to the bottom wall 204 of the excess water collecting container 250. The movable plate 272 is positioned so as to extend away from the first short side 252a and laterally beyond the second short side 252b, and is slidable along the bottom wall 204 towards and away from the first short side 252a.

More specifically, the movable plate 272 includes a plurality of spaced-apart slots 274 which are disposed side-by-side and which extend substantially parallel to the first and second long sides 252c, 252d. In the illustrated embodiment, the movable plate 272 includes three slots 274 but alternatively, the movable plate 272 could instead include a single slot or any number of slots that a skilled person would consider to be suitable. The movable plate 272 is connected to the bottom wall 204 by a plurality of fasteners 276, each fastener 276 extending into the bottom wall 104 through a respective slot 274.

To allow the excess water collecting container 250 to engage the mounting frame 252, the movable plate 272 can first be positioned in a mounting configuration in which the movable plate 272 is slid under the bottom wall 254 towards the first short side 252a such that when the first short side 252a engages the rail channel 262 of the first rail 260a, the movable plate 272 clears the second rail 260b. This configuration could allow the excess water collecting container 250 to be mounted to the mounting frame 252 from underneath, for example.

Once the first short side 252a is received in or is at least aligned with the rail channel 262 of the first rail 260a, the movable plate 272 could be moved to an operating configuration in which the movable plate 272 is slid laterally away from the first short side 252a so as to extend further beyond the second short side 252b. More specifically, the movable plate 272 is slid laterally outwardly so as to engage the rail channel 262 of the second rail 260b. In this configuration, the excess water collecting container 250 and/or the mounting frame 252 could include one or more stop members and/or visual indicators which would provide confirmation to the user that the excess water collecting container 250 is properly positioned in vertical alignment with the outlet openings of the movable grow table 16.

It will be understood that the mounting bracket 270 described above is merely provided as an example and that the mounting bracket 270 may have one of various other configurations. For example, the mounting bracket 270 may extend laterally beyond any one of the sides 252a, 252b, 252c, 252d of the excess water collecting container 250 and be receivable in a corresponding receiving structure. In another embodiment, instead of including a single mounting bracket 270, the excess water collecting container 250 could include a second mounting bracket similar to the mounting bracket 270 but extending away from the first short side 252a to engage the rail channel 262 of the first rail 262a. In other embodiments, the mounting bracket 270 could have any other shape and configuration that a skilled person would consider to be suitable.

In some embodiments, the excess water collecting container 250 may not include a mounting bracket 270. Instead, the excess water collecting container 250 could be sized and shaped to allow the first short container side 252a to engage the rail channel 262 of the first rail 260a and the second short container side 252b to directly engage the rail channel 262 of the second rail 260b, without requiring a mounting bracket. In this embodiment, the excess water collecting container 250 could be inserted into the rail channels 262 through open ends of the rails 260a, 260b and slid into position along the rails 260a, 260b.

In one embodiment, the process of collecting excess water using the excess water collecting container 250 may be performed entirely manually. Specifically, when a user wishes to collect the excess water for measurement and/or analysis, the user may manually position the excess water collecting container 250 between the movable grow table 16 and the drain assembly 202 and in vertical alignment with the outlet openings of the movable grow table such that the excess water is received in the excess water collecting container 250 during a watering cycle of the irrigation system 100. Once the excess water has been collected, the user may then manually removes the excess water collecting container 250 from under the movable grow table 16 and may open the valve 284 to transfer the excess water into a measurement device or another container for measurement and /or analysis.

It will be appreciated that since the excess water collecting container 250 is removable from the mounting structure 258, this configuration eliminates the need to provide an excess water collecting container 250 for each movable grow tables 16 in a same location. Instead, a single excess water collecting container 250 could be used to successively collect excess water from multiple movable grow tables 16 in order to perform "spot checks" regarding the irrigation systems associated with each grow table.

In other embodiments, some or all steps of the excess water collecting process could be automated. For example, the excess water collecting container 250 may be operatively connected to a container actuator which can be operated by the user to selectively move the excess water collecting container 250 between the movable grow table 16 and the drain assembly 202 to collect the excess water and out from between the movable grow table 16 and the drain assembly 202 to allow the excess water to flow from the plant containers 13 to the drain assembly 202 below. In some embodiments, the container actuator may be operatively connected to a controller to allow the excess water collecting container 250 to be moved between the movable grow table 16 and the drain assembly 202 to collect the excess water at a desired frequency, e.g. every 10 watering cycles. The controller may further be operatively connected to a valve actuator coupled to the valve 284 to automatically open the valve 284 once the watering cycle is completed to transfer the excess water in a measuring device. The measuring device could further be operatively connected to the controller to provide data related to the excess water to the controller. The controller could further be operatively connected to other components of the irrigation system 100 to allow the controller to adjust the irrigation system 100 based on the data received from the measuring device. In the present description, the same numerical references refer to similar elements. Furthermore, for the sake of simplicity and clarity, namely so as to not unduly burden the figures with several reference numbers, not all figures contain references to all the components and features, and references to some components and features may be found in only one figure, and components and features of the present disclosure which are illustrated in other figures can be easily inferred therefrom. The embodiments, geometrical configurations, materials mentioned and/or dimensions shown in the figures or described in the present disclosure are embodiments only, given solely for exemplification purposes.

Furthermore, in the context of the present description, it will be considered that all elongated objects will have an implicit "longitudinal axis" or "centerline", such as the longitudinal axis of a shaft for example, or the centerline of a biasing device such as a coiled spring, for example, and that expressions such as "connected" and "connectable", "secured" and "securable" or "mounted" and "mountable", may be interchangeable, in that the present irrigation system also relates to kits with corresponding components for assembling a resulting fully-assembled and fully-operational irrigation system.

Moreover, components of the present irrigation system and/or steps of the method(s) described herein could be modified, simplified, altered, omitted and/or interchanged, without departing from the scope of the present disclosure, depending on the particular applications which the present irrigation system is intended for, and the desired end results, as briefly exemplified herein and as also apparent to a person skilled in the art.

In addition, although the embodiments as illustrated in the accompanying drawings comprise various components, and although the embodiments of the present irrigation system and corresponding portion(s)/part(s)/component(s) as shown consist of certain geometrical configurations, as explained and illustrated herein, not all of these components and geometries are essential and thus should not be taken in their restrictive sense, i.e. should not be taken so as to limit the scope of the present disclosure. It is to be understood, as also apparent to a person skilled in the art, that other suitable components and cooperation thereinbetween, as well as other suitable geometrical configurations may be used for the present irrigation system and corresponding portion(s)/part(s)/component(s) according to the present irrigation system, as will be briefly explained herein and as can be easily inferred herefrom by a person skilled in the art, without departing from the scope of the present disclosure.

To provide a more concise description, some of the quantitative and qualitative expressions given herein may be qualified with the terms "about" and "substantially". It is understood that whether the terms "about" and "substantially" are used explicitly or not, every quantity or qualification given herein is meant to refer to an actual given value or qualification, and it is also meant to refer to the approximation to such given value or qualification that would reasonably be inferred based on the ordinary skill in the art, including approximations due to the experimental and/or measurement conditions for such given value.

Although the present invention has been described hereinabove by way of specific embodiments thereof, it can be modified in various ways, without departing from the subject invention defined in the appended claims.

## Claims

1. An irrigation system for irrigating a plurality of plants growing in growing media, the irrigation system comprising:
a movable grow table for supporting and displacing the plurality of plants; and
a gravity irrigation device coupled to the movable grow table and being displaceable therewith, the gravity irrigation device comprising:
a reservoir coupled to the movable grow table and configured for receiving water, the reservoir comprising an outlet formed in a lower section thereof and being located above the growing media in which the plurality of plants are growing so as to provide head pressure;
a main header in fluid communication with the outlet of the reservoir and configured for receiving a flow of water therefrom, the main header comprising a plurality of header outlets along a length thereof; and
a plurality of microtubes respectively extending from the plurality of header outlets and configured for receiving a head-pressurized flow of water from the main header for flow through the microtubes, the microtubes each having a microtube outlet positioned proximate to a corresponding one of the plants such that the microtubes expel water from respective microtube outlets to evenly irrigate the plants.

2. The irrigation system of claim 1, wherein each of the plurality of microtube outlets is located above the main header, allowing the main header to be filled with water so as to build the head pressure, and then providing the head-pressurized flow to travel through the microtubes upwardly and then downwardly towards the plants.

3. The irrigation system of any one of claims 1 and 2, wherein the reservoir is located at a pre-determined height above the growing media so as to provide the head pressure sufficient to expel water from the microtube outlets.

4. The irrigation system of any one of claims 1 to 3, wherein the head pressure is between 5 and 0.20 meters, between 4 and 0.30 meters, between 3 and 0.40 meters or between 2 and 0.50 meters.

5. The irrigation system of any one of claims 1 to 4, further comprising a filter located in the reservoir and/or the main header and configured so as to prevent oversized debris reaching the microtubes.

6. The irrigation system of claim 5, wherein the filter is located in the reservoir and covers the outlet of the reservoir and comprises a plurality of pores configured to permit the water to flow therethrough, wherein the pores are smaller than the microtube outlets.

7. The irrigation system of any one of claims 1 to 6, wherein the flow of water from the reservoir is greater than the head-pressurized flow of water expelled from the microtube outlets.

8. The irrigation system of any one of claims 1 to 7, wherein the microtubes each comprises a microtube first member extending from the main header and a microtube end member extending from the microtube first member at a microtube angle, the microtube angle being provided about the respective microtube outlet.

9. The irrigation system of claim 8, wherein the microtube angle is between 80 degrees and 100 degrees, preferably 90 degrees.

10. The irrigation system of any one of claims 1 to 9, wherein the microtubes each defines a microtube inner diameter and the main header defines a main header inner diameter, the microtube inner diameter being smaller than the main header inner diameter.

11. The irrigation system of claim 10, wherein the ratio main header inner diameter: microtube inner diameter is between 2 and 15.

12. The irrigation system of any one of claims 1 to 11, wherein the microtube outlets are located at the same level above the main header.

13. The irrigation system of any one of claims 1 to 12, wherein the microtubes each defines a microtube highest point, the microtube highest points being located at the same level above the main header.

14. The irrigation system of any one of claims 1 to 13, further including a non-absorbed water collecting container removably positionable below the movable grow table, in vertical alignment therewith, for receiving non-absorbed water flowing down from the plants by gravity, the non-absorbed water collecting container including a plurality of side walls and a bottom wall.

15. A method for irrigating a plurality of plants growing in growing media, the method for example utilizing a system according to any of the preceding claims, the method comprising:
providing water in a reservoir located above a movable table and being displaceable therewith;
flowing the water by gravity under a head pressure from the reservoir, through a main header, and then into a plurality of microtubes in fluid communication with the main header; and
expelling the water from the microtubes into the plants at an even distribution.
